# EUROPEAN PATENT APPLICATION

(11) **EP 2 698 726 A1**
(43) Date of publication of application: **19.02.2014**
(21) Application number: 12180946.1
(22) Date of filing: 17.08.2012
(51) Int. Cl.: G06F 17/24, G06F 17/30, G06Q 10/00, G06Q 30/00

(54) **Method of creating a digital document, document creation system, computer program, and data carrier.**

(71) Applicant: Vintage Productions, 2000 Antwerpen (BE)
(72) Inventor: Cauwenbergh, Tim, 2000 Antwerpen (BE); Huybrighs, Maarten, 2000 Antwerpen (BE); Lesy, Dave, 2000 Antwerpen (BE); Mertens, Bart, 2000 Antwerpen (BE)
(74) Representative: Sarlet, Steven Renaat Irène

(57) **Abstract**

Method of creating a plurality of mutually different digital documents from a plurality of digital content elements. A document creation cycle comprises the steps: - providing a computer system on which a plurality of graphical and textual content elements are stored, - obtaining a value for at least one user parameter; - forming, on the basis of said at least one user parameter value, a sub-set of the plurality of stored content elements, - combining a number of representation elements that are representative for at least a part of the sub-set of content elements, thus generating a preliminary version of said generated digital document having a reduced resolution; - providing said preliminary version of the digital document on the user interface; and -
generating the digital document. The method comprises varying the number of user parameters, varying at least one user parameter type, and/or varying a number of base content elements.

## Description

### Field of the invention

The invention relates to a method of creating digital documents, e.g. sales documents. The invention also relates to a computer system arranged for creating digital documents, e.g. sales documents. The invention also relates to a computer program product and to a data carrier.

### Background

Digital documents are available in a wide range of types and formats. An example of a digital document is a digital sales tool. Such a sales tool can be provided in various forms, e.g. in the form of a digital leaflet, a digital brochure, or a web page. A user of a sales tool, e.g. a sales person, may wish to create a sales tool adapted to his needs. For example, a user may wish to picture, in a user-specific way, in a sales tool a specific set of products that are to be sold by the user.

There are various ways of creating digital documents. A way of creating a digital document depends on a required quality and intended use of the digital document. For use as a sales tool, relatively high quality requirements are usually imposed on the digital document. The digital document may e.g. need to be of sufficient quality in order to appeal to a target public for which the digital document is intended. Optionally, the digital document may need to be of sufficient quality for enabling it to be printed by a publisher. Alternatively, or additionally, in order to meet such requirements, usually a digital sales tool is created with the help of a professional designer. For creating a digital sales tool, a professional designer typically uses professional design software. However, hiring a professional designer to create a digital sales tool is not always desirable or may even be impossible. For example, a cost of hiring the professional designer may be relatively high, e.g. may form a major part of the cost of creating digital sales tools. Furthermore, a professional designer may be unavailable at a moment that the user needs the professional designer. Thus, rapid creation of digital sales tools, or other digital documents, may be hindered. Creating the digital sales tool without the help of the professional designer may often be impossible for a sales person, as use of the professional software usually requires professional training that is lacking to said sales person.

### Summary

It is therefore an objective to provide a convenient method and system for creating a digital document. Preferably, said method and system can be used by users lacking professional document creation skills.

According to an aspect, there is provided a method of creating a plurality of mutually different digital documents, e.g. sales documents, by carrying out a document creation cycle a plurality of times, said document creation cycle comprising creating a digital document from a plurality of digital content elements.

According to an aspect, the document creation cycle comprises the step of providing a computer system on which a plurality of graphical and textual content elements are stored, preferably in a database, the content elements comprising a number of base content elements and a number of variation content elements each forming a variation of a base content element, a variation content element thus being associated with a base content element and further being associated with a value of at least one of a number of user parameters, wherein said number of user parameters comprises mutually different user parameter types such as e.g. a location user parameter, a language user parameter, a brand user parameter, and/or a culture user parameter. The number of user parameters may be formed by a single user parameter, or by a plurality of user parameters. A variation content element, and/or a base content element, may be associated with a single user parameter or with a plurality of user parameters.

According to an aspect, the document creation cycle comprises the step of obtaining, by means of a user interface that is a communicatively connectable and optionally connected, and preferably remote, part of the computer system, a value for at least one, and preferably all, of said number of user parameters.

According to an aspect, the document creation cycle comprises the step of forming, on the basis of said obtained at least one user parameter value, a sub-set of the plurality of stored content elements, said sub-set comprising a number of variation content elements associated with the obtained at least one user parameter value, and optionally comprising a base content element if no user parameter value associated with variation content elements optionally associated with that base content element is obtained and/or if no variation content element is associated with that base content element.

According to an aspect, the document creation cycle comprises the step of combining a number of representation elements that are representative for at least a part of the sub-set of content elements, wherein at least one of the number of representation elements has a resolution that is smaller than a resolution of the represented at least one content element stored on the computer system, wherein said combining comprises arranging the at least one representation element according to a template and thus generating a preliminary version of said generated digital document having a reduced resolution.

According to an aspect, the document creation cycle comprises the step of providing said preliminary version of the digital document on the user interface.

According to an aspect, the document creation cycle comprises the step of generating, preferably after receiving user consent, the digital document on the computer system by combining the at least part of the sub-set of content elements represented by the representation elements.

According to an aspect, the method comprises, in a document creation cycle, varying the number of user parameters compared to a previous document creation cycle, varying at least one user parameter type compared to a previous document cycle, and/or varying a number of base content elements for which variation content elements are provided. Preferably, one document creation cycle is carried out for each created digital document.

By means of the user parameters, a sub-set of the plurality of stored content elements can be made. The content elements of said sub-set can be formed e.g. according to an assumed preference of the user, said preference being inferred from the user parameters. As a result, when forming said sub-set, content elements relevant for a user may be selected based on the user parameters. Thus, user satisfaction may be enhanced compared to a situation wherein only base content elements are offered to a user, and wherein the user has to adapt those base content elements e.g. manually. Thus, a speed and efficiency of the method may be increased, e.g. because the amount of content elements that are used or considered when creating the digital document can be reduced. Such may contribute to convenience of creating digital documents.

Preferably, by means of the representation elements having a reduced resolution, the preliminary version of the digital document can be created rather rapidly, thus preventing long waiting rows. Such may contribute to convenience of creating digital documents. The finally created digital document may have a higher resolution than the preliminary version thereof, so that a relatively high quality of the digital document can be maintained.

Preferably, by means of the template, an appealing look can be provided to the digital document. The template may further facilitate a relatively efficient and convenient method of arranging the representation elements by the user.

Preferably, the method may enable convenient switching between document creation cycles when different cycles are directed to creation of different documents. Switching to creation of another document may e.g. comprise obtaining at least one new user parameter value and/or removing at least one old user parameter value. Thus, in a document creation cycle, the method may, optionally, comprise obtaining at least one user parameter value that was not obtained in a previous document creation cycle and/or may comprise not using at least one user parameter value that was used in a previous document creation cycle. As a result, in a document creation cycle, the number of user parameters compared to a previous document creation cycle and/or at least one user parameter type compared to a previous document cycle, may be varied. Alternatively, or additionally, a number of base content elements for which variation content elements are provided may be varied.

It may thus be appreciated that the method may, preferably, enable sharing of information, e.g. content elements, user parameter types, user parameter values, and/or associations there between, between document creation cycles. Hence, information available in a previous document creation cycle may be available in a later document creation cycle. Such may promote a convenience of creating a digital document such as e.g. a sales tool.

As a result, a user-friendly method is provided for creating a digital document having a relatively high quality, which can e.g. be used as a sales tool. Hence, conventionally needed professional assistance may be superfluous. Thus, the digital document can e.g. be created by a sales person lacking professional document creation skills.

There is further provided a computer system arranged for carrying out a method according to the invention.

According to an aspect, there is provided a computer system comprising a user interface that is a communicatively connectable and optionally connected, and preferably remote, part of the computer system, the computer system being arranged for creating a plurality of mutually different digital documents, e.g. sales documents, by carrying out a document creation cycle a plurality of times. The computer system may form a storage part, a reservoir part, a design part, and/or a creator part. Such parts being mutually communicatively connected or connectable.

According to an aspect, the storage part is arranged for, in a document creation cycle, storing a plurality of graphical and textual content elements, preferably in a database, the content elements comprising a number of base content elements and a number of variation content elements each forming a variation of a base content element, a variation content element thus being associated with a base content element and further being associated with a value of at least one of a number of user parameters, wherein said number of user parameters comprises mutually different user parameter types such as e.g. a location user parameter, a language user parameter, a brand user parameter, and/or a culture user parameter.

According to an aspect, the user interface is arranged for, in the document creation cycle, obtaining a value for at least one, and preferably all, of said number of user parameters.

According to an aspect, the reservoir part is arranged for, in the document creation cycle, forming, on the basis of said obtained at least one user parameter value, a sub-set of the plurality of stored content elements, said sub-set comprising a number of variation content elements associated with the obtained at least one user parameter value, and optionally comprising a base content element if no user parameter value associated with variation content elements optionally associated with that base content element is obtained and/or if no variation content element is associated with that base content element.

According to an aspect, the design part is arranged for, in the document creation cycle, combining a number of representation elements that are representative for at least a part of the sub-set of content elements, wherein at least one of the number of representation elements has a resolution that is smaller than a resolution of the represented at least one content element stored on the computer system, wherein said combining comprises arranging the at least one representation element according to a template and thus generating a preliminary version of said generated digital document having a reduced resolution.

According to an aspect, the creator part is arranged for creating, in the document creation cycle, a preliminary version of the digital document on the user interface, and for generating, preferably after receiving user consent, the digital document on the computer system by combining the at least part of the sub-set of content elements represented by the representation elements.

According to an aspect, the system is further arranged for, in the document creation cycle, varying the number of user parameters compared to a previous document creation cycle, varying at least one user parameter type compared to a previous document cycle, and/or varying a number of base content elements for which variation content elements are provided compared to a previous document creation cycle.

In an embodiment, the computer system comprises at least one further user interface that is a communicatively connectable and optionally connected, and preferably remote, part of the computer system, the user interface and the further user interface preferably being mutually remote, the computer system being arranged for carrying out the document creation cycle by means of the user interface and for carrying out a further document creation cycle by means of a further user interface.

There is further provided a computer program product being arranged for carrying out, when the computer program product is being run on a computer, a method according to the invention.

There is further provided a data carrier comprising a computer program being arranged for carrying out, when the computer program is being run on a computer, a method according to the inventions.

Further embodiments are described in the sub-claims and/or in the detailed description.

### Brief description of the drawing

Embodiments of the invention will be further illustrated with respect to the drawings, wherein:
Figure 1 schematically shows various steps of a document creation cycle that can be used in a first method;
Figure 2 schematically indicates a number of base content elements and a number of variation content elements;
Figure 3A schematically indicates user parameters and values of a user parameter;.
Figure 3B schematically indicated that values of different user parameters can be associated to a variation content element; and
Figure 4 shows a schematic representation of an embodiment of a computer system according to the invention.

### Detailed description of embodiments

The present invention will be described with respect to particular embodiments and with reference to certain drawings but the invention is not limited thereto. The drawings described are only schematic and are nonlimiting. Furthermore, the terms first, second, third and the like in the description and in the claims, are used for distinguishing between elements and not necessarily for describing a sequential or chronological order. The terms are interchangeable under appropriate circumstances and the embodiments of the invention can operate in other sequences than described or illustrated herein.

The term "a" does not exclude a plurality. The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means C and D" should not be limited to devices consisting only of components C and D.

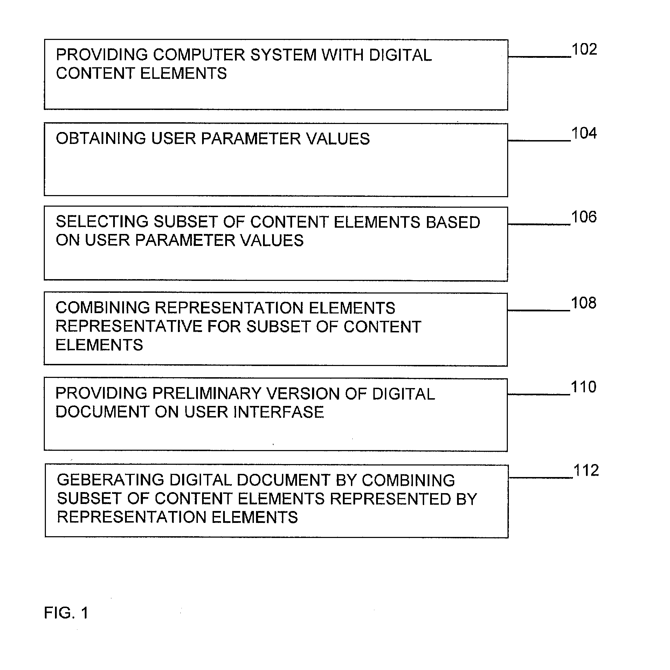

Figure 1 schematically illustrates a first embodiment of a method according to the invention, said embodiment further being referred to as the first method. The first method may comprise creating a plurality of mutually different digital documents. The first method will be illustrated with reference to digital sales documents, being examples of digital documents. It may however be clear that the first method may, optionally, also be carried out for creating other documents.

The first method may comprise carrying out a document creation cycle a plurality of times. Said document creation cycle comprising creating a digital sales document from a plurality of digital content elements. Figure 1 shows various steps of a document creation cycle that can be used in the first method.

The document creation cycle may comprise a step 102 of providing a computer system on which a plurality of graphical and textual content elements are stored. Such content elements may form parts that can potentially be used for composing a digital sales document thereof. Thus, such elements may e.g. comprise sales text and/or sales pictures, e.g. pictures of products that are to be sold. The content elements may e.g. be stored in a database.

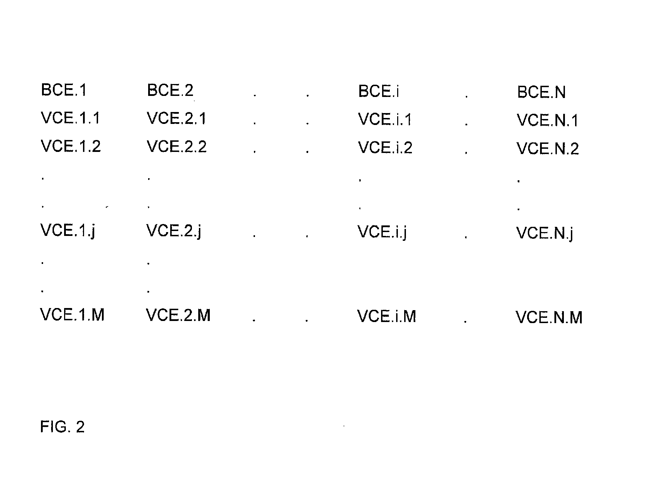

The content elements comprise a number of base content elements BCE.i (i=1, ..., N) and a number of variation content elements VCE.i.j (i=1, ..., N; j=1, ..., M), as schematically indicated in figure 2. Each variation content element may form a variation of a base content element BCE.i. In that way, a variation content element VCE.i.j is associated with a base content element BCE.i. It may be clear that, if a certain variation content element is associated with a certain base content element, that then that certain base content element is also associated with that certain variation content element, and vice versa. N may indicate a total number of base content elements. M may indicate a total number of variation content elements associated with a certain base content element BCE.i. Although in figure 2 a total number of variation content elements is suggested to be the same for each base content element, said total number of variation content elements may differ between base content elements BCE.i.

A base content element may be formed by a textual content element and/or by a graphical content element. A base content element may e.g. contain a part of a text of a sales document, and may contain a picture that accompanies said part of the text. Alternatively, the part of the text and the picture may be regarded as separated base content elements. Thus, a sales document may comprise a plurality of content elements. A database in which the content elements (base content elements and variation content elements) are stored, may be organised so that the content elements are stored therein as separated text elements and/or image elements. As a result, mutually different digital documents may contain different content elements. A variation content element may e.g. comprise a translation of text comprises by the base content element to which it is associated. Alternatively or additionally, the variation content element may comprise a picture that shows a product of the same kind as the picture of an associated base content element, but being of a different brand. In such a way, the variation content element can be associated with the base content element. A base content element comprising text preferably comprises text in English. In such examples, "language" respectively "brand" can be regarded as mutually different user parameters.

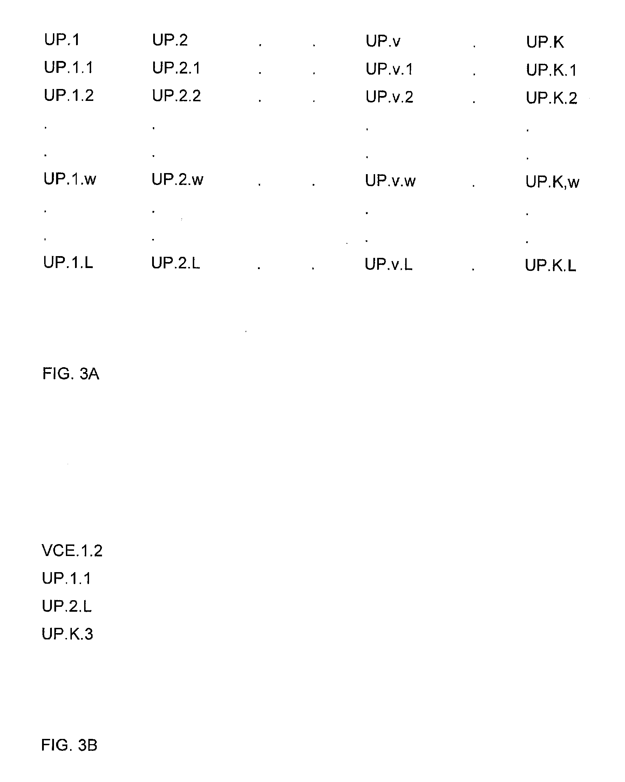

Variation content elements are further associated with a value of at least one of a number of user parameters. Hence, e.g. three (or another number, e.g. one or seven) values of respectively three (or said other number) mutually different user parameters may be associated with a single variation content element. If being larger than one, said number of user parameters comprise mutually different user parameter types such as e.g. a language user parameter and a brand user parameter. Such is schematically illustrated in figures 3A and 3B. User parameters are indicated with UP.v (v=1, ..., K) and values of a user parameter are indicated with UP.v.w. (v=1, ..., K and w=1, ..., L), as schematically indicated in figure 3A. Variable v may be regarded as indicating a type of the user parameter, different values of v indicating different user parameter types. K may indicate a total number of user parameter types. L may indicate a total number of user parameter values of a certain type UP.v. Although in figure 3A a total number of user parameter values is suggested to be the same for each user parameter type, said total number of user parameter values may differ between user parameter types. Thus, one user parameter type may have a different number of user parameter values than another user parameter type.

Values of different user parameters can be associated to a variation content element, as schematically indicated in figure 3B. Therein, by way of example, it is expressed that variation content element VCE.1.2 is associated with user parameter values UP.1.1, UP.2.L, and UP.K.3. User parameter UP.1 may for example be a language user parameter, and language user parameter value UP.1.1 may for example be the Dutch language. User parameter UP.2 may for example be a country user parameter, and country user parameter value UP.2.L may for example be Belgium. User parameter UP.K may for example be a brand type user parameter, and brand type user parameter value UP.K.3 may represent a certain brand type.

Variation content elements, in particular when being associated with a language user parameter and/or a location user parameter, may form translations of text of a base content element to which they are associated. Thus, each translation may also be associated with a value of the language user parameter and/or a location user parameter. Thus, the number of user parameters may comprise at least a language user parameter and/or a location user parameter.

Preferably, the plurality of digital content elements comprises at least one textual base content element with associated therewith a number of variation content elements that are associated with a value of the language user parameter. Analogously, other variation content elements may show different brands of a product picture contained by a base content element to which they are associated.

Thus, a type of user parameter that can be considered is e.g. a location user parameter, in order to have variation content elements that are versions of a base content adapted to various locations. Other types of user parameters are possible as well. A location user parameter can e.g. be a country user parameter, a town user parameter, or a region user parameter, said region referring to a combination of countries or to a part of one or more countries. Alternatively, or additionally, a culture user parameter can be considered, in order to have variation content elements that are versions of a base content element adapted to various cultures. Such a base content element can e.g. be a template. Alternatively, in an embodiment the template may be selected by a user independently from the user parameter values. Alternatively, the template may be selected based on a combination of a plurality of user parameter values. A template may be arranged for presenting text in a language-specific way, e.g. for displaying a space in front of a colon in the French language. In order to arrange a template accordingly, the template may be selected based on at least a language user parameter.

The document creation cycle may further comprise a step 104 of obtaining, by means of a user interface, a value for at least one, and preferably all, of said number of user parameters. The user interface may be a communicatively connectable, e.g. connected, and preferably remote, part of the computer system. Thus, the user interface is preferably remote from a remaining part of the computer system. The user interface may e.g. be arranged for showing input fields in which a user can type values of user parameters. A web browser may be running on the computer system, in particular on the user interface. The users of the system may use the web browser to create a digital sales document.

The document creation cycle may further comprise a step 106 of forming a sub-set of the plurality of stored content elements. Said forming is carried out on the basis of said obtained at least one user parameter value. As a result, said sub-set comprises a number of variation content elements associated with the obtained at least one user parameter value. E.g., a certain variation content element may be associated with one user parameter value, or may be associated with a plurality of user parameter values. It may be that no variation content element is associated with a certain base content element. Alternatively, it may be that no one of the variation content elements associated with a certain base content element is associated with one of the user parameter values that are obtained. Then, that certain base content element may be selected when forming the sub-set. Thus, a base content element may be selected in said step 106 if no user parameter value associated with variation content elements optionally associated with that base content element is obtained, and/or if no variation content element is associated with that base content element.

The document creation cycle may further comprise a step 108 of combining a number of representation elements that are representative for at least part of the sub-set of content elements. The number of representation elements may e.g. be equal to the number of content elements in the sub-set. Alternatively, the number of representation elements may be smaller than the number of content elements in the sub-set. Then, the number of representation elements may be equal to, or larger than, a number of content elements forming said at least part of the sub-set of content elements.

A representation element of said number of representation elements has, preferably at least if representing graphical content elements, a resolution that is smaller than a resolution of a represented content element stored on the computer system. Thus, a version of content elements of the sub-set can be represented on the user interface with a reduced resolution in comparison with the represented content elements stored on the computer system. Such representation may in particular be useful when representing graphical content elements. Thus, in particular, one or more graphical content elements may be represented with reduced resolution. Other content elements may be represented without reduced resolution.

The combining of step 108 may further comprise arranging at least one content element according to a template. In that way, a preliminary version of said generated digital document having a reduced resolution may be obtained. An appearance and an order of the representation elements in the preliminary version of the digital document, and/or an appearance and order of the sub-set of content elements in the digital document, may defined by means of the template. Optionally, the template is formed by one of the digital content elements. The template may e.g. be associated with a language user parameter. Such may be valuable, as a template may be adapted to a writing and/or reading direction inherent to a language. Such a writing direction and/or reading direction may e.g. be from left to right or from right to left, depending on the language. More in general, one or more templates may e.g. define how the content elements of the sub-set are shown. One or more templates may be created in an open, non proprietary technology (XSL-FO). Such creation may be performed by a user or by an operator of the computer system or a part thereof. A template can be flexible. Thus, a template may enable a user to create any number of pages he or she wants, preferably without any development or special software to be required. Various templates may be provided for various digital documents. Appropriate content elements may be available from the database for a particular digital document.

The document creation cycle may further comprise a step 110 of providing said preliminary version of the digital document on the user interface.

The document creation cycle may further comprise a step 112 of generating, preferably after receiving user consent, the digital document on the computer system by combining the sub-set of content elements represented by the representation elements. The digital document may be generated in whatever format that is applicable. This can be, but is not limited to, low resolution PDFs in RGB, high resolution PDFs in CMYK, high resolution PDFs with cropmarks, formats suitable for i-presentations (e.g. a HTML format such as HTML5), and/or formats suitable for web banners (e.g. a HTML format such as HTML5).

The first method may comprise, in a document creation cycle, varying the number of user parameters compared to a previous document creation cycle. Alternatively or additionally, the first method may comprise varying at least one user parameter type compared to a previous document cycle. Alternatively, the first method may comprise varying a number of base content elements for which variation content elements are provided. A part of the user parameter types, user parameter values, and/or content elements used in a document creation cycle may have been used also in a previous document creation cycle. Hence, user parameter types, user parameter values, and/or variation content elements may be reused or shared between different document creation cycles. Such may enable efficient and convenient switching between document creation cycles.

It may be appreciated that a user interface used in a document creation cycle can be remote from a user interface used in a further document creation cycle. Thus, a first sales person may create a digital document by means of a digital document creation cycle, after - or while - a second sales person creates another digital document while e.g. being at another location. Said first and second sales person may experience mutually different user parameters, e.g. a different number and/or type of the user parameters. Additionally, the number of base content elements for which variation content elements are provided may be different. Thus, the first method may enable creation of digital documents in a versatile way. The first method may enable one document creation cycle to profit from another document creation cycle. E.g., a plurality of graphical and textual content elements provided for the benefit of one document creation cycle may be used in a further document creation cycle as well. As a result, a versatile and efficient method of creating a plurality of mutually different digital documents may be provided.

The first method may be varied or supplemented by other steps, to obtain further embodiments according to the invention.

In a second embodiment (a second method), user parameters may be associated with a level selected from a plurality of mutually ranked levels. Thus, each user parameter value may be associated with a level. When forming, on the basis of obtained user parameter values, the sub-set of the plurality of stored content elements, variation content elements may be subsequently selected in accordance with their respective level, e.g. starting at the lowest level. For example, a language user parameter may be associated with a level that is higher than a level with which a country user parameter is associated. Then, firstly, a certain variation content element that is associated with a certain base content element and a country user parameter value, can be selected in order to replace that certain base content element. Then, afterwards, if there is a further variation content element that is associated with that certain base content element and is further associated with a language user parameter value, that further variation content element can be selected in order to replace the previously selected certain variation content element. Thus, variation content elements can be regarded as cascading to lower levels automatically, after associating ranked levels to the variation content elements by means of ranking the associated user parameters and their respective values. As a result, only the content elements that actually differ from another, e.g. higher, level have to be adapted, even if content elements associated with different levels are shown together on one page of a digital sales document. As a result, e.g. translation of base content elements and adjustment of base content elements to a location of a prospective public of the digital sales document, can be organised efficiently. If, in the example given above, the certain variation content element would have been associated with both a country user parameter value and a language user parameter value, said replacement may be omitted.Thus, a user can be enabled to create and update content elements at once, by means of defining the user parameters and their values. The cascading structure can be based on a set of user parameters and their values. Optionally, the user can select which base content elements are replaced, or are not replaced, by a variation content element.

Different users, e.g. sales persons, may be linked to one client, e.g. a company or group of companies that employs the different users. Alternatively, different users may be linked to different clients. Different clients may represent different companies. The database, e.g. provided on a central server of the computer system, may be organised and/or developed in such a way that it can be used for different users, and optionally also for different clients, regardless of the hierarchical structure of variation content elements preferred by those clients. Such use can be enabled without additional developments to the database being required. For example, the content elements for client A can be organised on a country-language level (with variation content elements optionally being associated with a value of a country user parameter with associated level, a value of a language user parameter with associated level, and/or with a combination of a value of a country user parameter with associated level and a value of a language user parameter with associated level), whereas the content for client B can be organised a country level, language level, and brand level (with variation content elements optionally being associated with a value of a country user parameter with associated level, a value of a language user parameter with associated level, a value of a brand user parameter with associated level, and/or combinations thereof). Thus, subsequent document creation cycles may be conveniently carried out by different users to create different digital documents. The number of possible user parameters and/or values thereof may be extended. The cascading structure may be flexible. Hence, it can be configured according to the clients needs. Also the way the clients products are organised can be defined, usually without requiring additional development.

When defining user parameters and/or user parameter values, optionally, restrictions between user parameters and/or user parameter values may be defined. For example, a user may select one or more user parameters and define by which one or more other user parameters they are restricted. By means of such restrictions, a hierarchy between user parameters may be defined that can deviate from, or agree with, the mutual levels of the user parameters. Restrictions may be applied together with, or without, associating levels to the user parameters. Restrictions may be useful when one or more user parameter values depend on one or more other user parameter values. For example, a user parameter value for user parameter 'language' may depend on a user parameter value for user parameter 'country'. Thus, user parameter 'language' may be restricted by user parameter 'country'. Thus, a user parameter structure can be defined, e.g. by a user. The user parameter structure may comprises restrictions between user parameter (values) and/or mutual levels between user parameters. A user may be allowed to fix a defined user parameter structure, or the user parameter structure may be fixed otherwise.

In a third embodiment (a third method), user parameters are obtained after receiving a user profile of the user. The second method may further comprise obtaining stored user parameters that are associated with said user profile. Said stored user parameters may e.g. be stored on the computer system before obtaining the user profile. Obtaining the user parameters may thus comprise receiving the user profile. Obtaining the user parameters may further comprise obtaining stored user settings that define a number of base content elements for which variation content elements are provided. Such user settings may be stored on the computer system. In particular, said stored user settings are stored on the computer system before obtaining the user profile.

In a fourth embodiment (a fourth method), representation elements that are combined are previously selected by the user after showing the combined representation elements among further representation elements on the user interface. Thus, as a result of said selecting, a part of the sub-set of content elements may be obtained. Thus, the fourth method may comprise showing a plurality of representation elements on the user interface for selection by the user. Then, selected representation elements may be combined for generating the preliminary version of said generated digital document. In that way, a user-specific preliminary version of said generated digital document can be obtained. As an example of such selection, the fourth method may comprise, preferably before user consent, adjusting of the preliminary version of the digital document to obtain an adjusted version of the preliminary digital document. Such a customisation step may be appreciated by a user, and offers an additional flexibility that may be useful for obtaining a desired digital sales document.

For example, after creating a digital document (i.e. after user consent), the users can customise a number of fields inside the digital document. A client may e.g., more in general, determine which fields in a template are available for customisation by a user linked to that client. Thus, a client may determine an amount of flexibility the user can get when creating a digital document. Such flexibility for a user may be enabled without significant additional developments to the database. Such flexibility e.g. allows a user to edit text of a content element, select an image out of the database, upload his or her own pictures. Such can be enabled by means of a web browser running on the user interface, again optionally without significant development or special software being required.

The first, second, third, and/or fourth method, or another embodiment, may further comprise printing the digital document after forming the digital document. When printing the digital document, a plurality of printed documents may be produced based on one digital document.

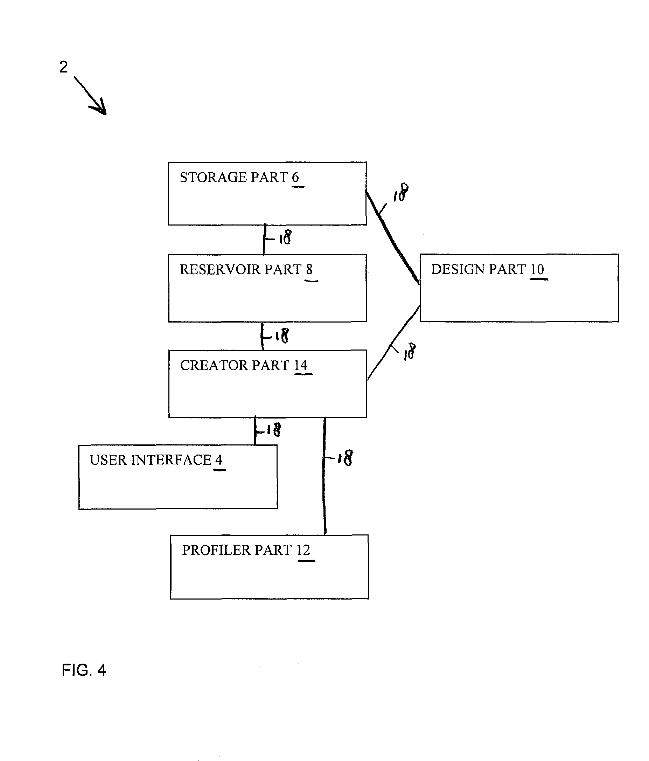

Figure 4 shows a schematic representation of an embodiment of a computer system 2 according to the invention. Hence, the computer system 2 may be arranged for carrying a method according to the invention, e.g. the first method, the second method, the third method, the fourth method, and/or another method. In particular, the computer system 2 is arranged at least for carrying out a document creation cycle. When describing below the reference system with reference to figure 4, implicit or explicit reference to the first, second, third, and/or fourth method as described herein above may be made.

The computer system 2 may comprise a user interface 4. The user interface 4 is a communicatively connectable, e.g. connected, and preferably remote, part of the computer system 2. The computer system may comprise further additional parts, e.g. a storage part 6, a reservoir part 8, an optional profiler part 10, a design part 12, and a creator part 14. Said parts may be mutually communicatively connected, indicated in figure 4 by lines 18. Said parts may be individually formed by one or more separate computers and/or user interfaces. Alternatively or additionally, one or more of such parts may be provided on one and the same computer and/or user interface. The computer system is arranged for creating a plurality of mutually different digital documents, e.g. sales documents, by carrying out a document creation cycle a plurality of times,

The storage part 6 may be provided with the database comprising the plurality of graphical and textual content elements. The storage part 6 is thus arranged for storing thereon the plurality of graphical and textual content elements. The content elements comprise a number of base content elements and a number of variation content elements each forming a variation of a base content element, a variation content element thus being associated with a base content element. A variation content element may further be associated with a value of at least one of a number of user parameters. Said number of user parameters may comprise mutually different user parameter types such as e.g. a location user parameter, a language user parameter, a brand user parameter, and/or a culture user parameter.

The user interface 4 may be arranged for, in a document creation cycle, obtaining a value for at least one, and preferably all, of said number of user parameters.

The reservoir part 8 may be arranged for, in said document creation cycle, forming, on the basis of said obtained at least one user parameter value, the sub-set of the plurality of stored content elements. Said sub-set comprises the number of variation content elements associated with the obtained at least one user parameter value, and optionally comprises a base content element if no user parameter value associated with variation content elements associated with that base content element is obtained. The reservoir part may be provided with a digital media library comprising digital media. The reservoir part may be arranged for storing properties of the digital media and/or other files, such as the content elements and the user parameter values. Associations between base content elements and variation content elements may be stored on the reservoir part of the computer system 2. Associations between the variation content elements and user parameter values may be stored on the reservoir part of the computer system 2.

The design part 10 may be arranged for, in said document creation cycle, combining a number of representation elements that are representative for at least a part of the sub-set of content elements. The at least one of the number of representation elements has a resolution that is smaller than a resolution of the represented at least one content element stored on the computer system. The reservoir part may be arranged for generating and/or storing the number of representation elements. However, preferably, templates are stored in the design part instead of the reservoir part. The design part 8 may further be arranged for arranging the at least one representation element according to a template and thus generating a preliminary version of said generated digital document having a reduced resolution. Other digital media, e.g. from the digital media library stored on the reservoir part, may also be included. The design part may be arranged for changing a resolution of content elements and/or other stored or generated files, in order to obtain a desired resolution. E.g., the design part may be arranged to generate PDF documents.

The creator part 14 may be arranged for creating, in said document creation cycle, a preliminary version of the digital document on the user interface 4. The creator part may further be arranged for generating, preferably after receiving user consent, the digital document on the computer system by combining the at least part of the sub-set of content elements represented by the representation elements. The creator part 14 may further be arranged for downloading files, e.g. from the reservoir part 8, from the design part 10, from the user interface 4, from the profiler part 12, and/or from the storage part 6.

The system 2 is further arranged for, in said document creation cycle, varying the number of user parameters compared to a previous document creation cycle, varying at least one user parameter type compared to a previous document cycle, and/or varying a number of base content elements for which variation content elements are provided compared to a previous document creation cycle.

The profiler part 12 may be arranged for storing thereon a user profile of a user and/or a client. The profiler may further be arranged for comprising stored user parameters and/or user parameter values, said parameters and/or values being associated with said user profile. The profiler part 12 may be arranged for creating, adapting, and/or deleting user profiles. The profiler part 12 may be arranged for giving or blocking access to one or more applications. The profiler part 12 may be arranged for associating a level to a user parameter. By means of the profiler part 12, e.g. users and/or access rights may be managed. The profiler part 12 may e.g. be arranged for sending mass mailings to users. Preferably, user profiles or other user data such as user restrictions are stored centrally on a central part of the computer system, i.e. not on computing means of a remote user interface. If a user logs in on the computing means of a remote user interface, user parameters and/or user restrictions may be obtained from said central part of the computer system.

It may thus be appreciated that embodiments are provided that enable a simplification of logistics of creating digital documents and/or printed documents. For example, adaptation to content elements can be that can have effect for a plurality of users. The invention is not limited to the described embodiments. For example, in general, the system could be used without implementation of the reservoir part. Then, only the templates coud be stored. Such a set-up may be used by clients that do not have shared content and thus do not require a database. In an embodiment, there may be provided a method of creating a plurality of mutually different digital documents from a plurality of digital content elements, wherein a document creation cycle comprises the steps: - providing a computer system on which a plurality of graphical and textual content elements are stored, - obtaining a value for at least one user parameter; - forming, on the basis of said at least one user parameter value, a sub-set of the plurality of stored content elements, - combining a number of representation elements that are representative for at least a part of the sub-set of content elements, thus generating a preliminary version of said generated digital document having a reduced resolution; - providing said preliminary version of the digital document on the user interface; and/or - generating the digital document, wherein the method comprises varying the number of user parameters, varying at least one user parameter type, and/or varying a number of base content elements. Such an embodiment may optionally be combined with one or more aspects of the invention or features as described with reference to the drawings. It may be appreciated that the invention, in an embodiment, relates to a computer system and method for the online creation, customisation and/or generation of digital sales documents, in other words sales tools, such as brochures, advertisements, and posters. The computer system may comprise a central, client-independent database. This client-independent database may contain a number of content elements, in other words content blocks. The content blocks may be stored in such a way that they can relatively easily be used in the digital document, e.g. by means of associations with user parameters.

## Claims

1. Method of creating a plurality of mutually different digital documents, e.g. sales documents, by carrying out a document creation cycle a plurality of times, said document creation cycle comprising creating a digital document from a plurality of digital content elements, the document creation cycle comprising the steps:
- providing a computer system on which a plurality of graphical and textual content elements are stored, preferably in a database, the content elements comprising a number of base content elements and a number of variation content elements each forming a variation of a base content element, a variation content element thus being associated with a base content element and further being associated with a value of at least one of a number of user parameters, wherein said number of user parameters comprises mutually different user parameter types such as e.g. a location user parameter, a language user parameter, a brand user parameter, and/or a culture user parameter;
- obtaining, by means of a user interface that is a communicatively connectable, and preferably remote, part of the computer system, a value for at least one, and preferably all, of said number of user parameters;
- forming, on the basis of said obtained at least one user parameter value, a sub-set of the plurality of stored content elements, said sub-set comprising a number of variation content elements associated with the obtained at least one user parameter value, and optionally comprising a base content element if no user parameter value associated with variation content elements optionally associated with that base content element is obtained and/or if no variation content element is associated with that base content element;
- combining a number of representation elements that are representative for at least a part of the sub-set of content elements, wherein at least one of the number of representation elements has a resolution that is smaller than a resolution of the represented at least one content element stored on the computer system, wherein said combining comprises arranging the at least one representation element according to a template and thus generating a preliminary version of said generated digital document having a reduced resolution;
- providing said preliminary version of the digital document on the user interface; and
- generating, preferably after receiving user consent, the digital document on the computer system by combining the at least part of the sub-set of content elements represented by the representation elements;
wherein the method comprises, in a document creation cycle, varying the number of user parameters compared to a previous document creation cycle, varying at least one user parameter type compared to a previous document cycle, and/or varying a number of base content elements for which variation content elements are provided.

2. Method according to claim 1, wherein obtaining the user parameters comprises receiving a user profile of the user, and further comprises obtaining stored user parameters and/or user parameter values, said parameters and/or values being associated with said user profile.

3. Method according to claim 2, wherein said stored user parameters are stored on the computer system before obtaining the user profile.

4. Method according to one of claims 1-3, wherein obtaining the user parameters comprises receiving a user profile of the user, and further comprises obtaining stored user settings that define a number of base content elements for which variation content elements are provided.

5. Method according to claim 4, wherein said stored user settings are stored on the computer system before obtaining the user profile.

6. Method according to one of claims 1-5, wherein an appearance and an order of the representation elements in the preliminary version of the digital document, and/or an appearance and order of the at least part of the sub-set of content elements in the digital document, is defined by means of the template.

7. Method according to one of claims 1-6, wherein the template is formed by one of the digital content elements.

8. Method according to one of claims 1-7, wherein representation elements that are combined are previously selected by the user after showing the combined representation elements among further representation elements on the user interface, thus obtaining a user-specific preliminary version of said generated digital document.

9. Method according to one of claims 1-8, comprising, preferably before user consent, adjusting of the preliminary version of the digital document to obtain an adjusted version of the preliminary digital document.

10. Method according to one of claims 1-9, wherein user parameters are associated with a level from a plurality of mutually ranked levels, wherein, when forming the sub-set, variation content elements of the sub-set of the plurality of stored content elements are subsequently selected on the basis of obtained user parameter values in accordance with their respective levels.

11. Method according to one of claims 1-10, wherein the number of user parameters comprises at least a language user parameter and/or a location user parameter, wherein the plurality of digital content elements comprises at least one textual base content element with associated therewith a number of variation content elements that are associated with a value of the language user parameter and/or the location user parameter.

12. Method according to one of claims 1-11, further comprising printing the document after forming the document and/or ordering the document from a publisher.

13. Method according to one of claims 1-12, wherein a user interface used in a document creation cycle is remote from a further user interface of the computer system used in a further document creation cycle.

14. Computer system comprising a user interface that is a communicatively connectable, and preferably remote, part of the computer system, the computer system being arranged for creating a plurality of mutually different digital documents, e.g. sales documents, by carrying out a document creation cycle a plurality of times, wherein the computer system forms a storage part, a reservoir part, a design part, and a creator part, said parts being mutually communicatively connected, wherein the storage part is arranged for, in a document creation cycle, storing a plurality of graphical and textual content elements, preferably in a database, the content elements comprising a number of base content elements and a number of variation content elements each forming a variation of a base content element, a variation content element thus being associated with a base content element and further being associated with a value of at least one of a number of user parameters, wherein said number of user parameters comprises mutually different user parameter types such as e.g. a location user parameter, a language user parameter, a brand user parameter, and/or a culture user parameter, wherein the user interface is arranged for, in the document creation cycle, obtaining a value for at least one, and preferably all, of said number of user parameters, wherein the reservoir part is arranged for, in the document creation cycle, forming, on the basis of said obtained at least one user parameter value, a sub-set of the plurality of stored content elements, said sub-set comprising a number of variation content elements associated with the obtained at least one user parameter value, and optionally comprising a base content element if no user parameter value associated with variation content elements optionally associated with that base content element is obtained and/or if no variation content element is associated with that base content element, wherein the design part is arranged for, in the document creation cycle, combining a number of representation elements that are representative for at least a part of the sub-set of content elements, wherein at least one of the number of representation elements has a resolution that is smaller than a resolution of the represented at least one content element stored on the computer system, wherein said combining comprises arranging the at least one representation element according to a template and thus generating a preliminary version of said generated digital document having a reduced resolution, wherein the creator part is arranged for creating, in the document creation cycle, a preliminary version of the digital document on the user interface, and for generating, preferably after receiving user consent, the digital document on the computer system by combining the at least part of the sub-set of content elements represented by the representation elements, wherein the system is further arranged for, in the document creation cycle, varying the number of user parameters compared to a previous document creation cycle, varying at least one user parameter type compared to a previous document cycle, and/or varying a number of base content elements for which variation content elements are provided compared to a previous document creation cycle.

15. Computer system according to claim 14, comprising at least one further user interface that is a communicatively connectable, and preferably remote, part of the computer system, the user interface and the further user interface preferably being mutually remote, the computer system being arranged for carrying out the document creation cycle by means of the user interface and for carrying out a further document creation cycle by means of a further user interface.

16. Computer system according to claim 14 of 15, arranged for carrying out a method according to one of claims 1-13.

17. Computer program product being arranged for carrying out, when the computer program product is being run on a computer, a method according to one of claims 1-13.

18. Data carrier comprising a computer program being arranged for carrying out, when the computer program is being run on a computer, a method according to one of claims 1-13.
